Europäisches Patentamt

(19) European Patent Office

Office européen des brevets

(11) Publication number: **0 297 225 B1**

(12) # EUROPEAN PATENT SPECIFICATION

(45) Date of publication of patent specification: **03.07.91**   (51) Int. Cl.⁵: **B60J 7/057**

(21) Application number: **88105765.7**

(22) Date of filing: **12.04.88**

(54) **Device for automatical closing of the opening roof of a vehicle.**

(30) Priority: **02.07.87 IT 6092387 U**

(43) Date of publication of application:
**04.01.89 Bulletin 89/01**

(45) Publication of the grant of the patent:
**03.07.91 Bulletin 91/27**

(84) Designated Contracting States:
**AT BE CH DE ES FR GB GR IT LI LU NL SE**

(56) References cited:
**WO-A-80/01477**   **DE-A- 3 401 864**
**DE-B- 1 266 143**   **GB-A- 2 137 004**
**GB-A- 2 166 191**   **US-A- 3 386 022**

**PATENT ABSTRACTS OF JAPAN, vol. 9, no.
213 (M-408)[1936], 30th August 1985, page 25
M 408; & JP-A-60 71 330 (NIPPON DENSO
K.K.) 23-04-1985**

(73) Proprietor: **DELTA ELETTRONICA s.p.a.
Via Astico 41
I-21100 Varese (VA)(IT)**

(72) Inventor: **Memmola, Serafino
Via Cimabue, 62
I-21100 Varese (VA)(IT)**

(74) Representative: **Ferraiolo, Ruggero et al
Via Napo Torriani, 10
I-20124 Milano(IT)**

## Description

The invention according to this invention refers to a device for automatical closing of the opening roof of a vehicle.

The opening roofs of the vehicles, which in the text and in the claims we shall simply indicate as "roofs" are provided with a device for the opening and closing , which is directly manually or through an electric motor which is supplied by means of an electric supply circuit provided with one or more control keys. In addition, said roofs can have two kind of opening: that with practically horizontal translation and that with inclination from the orizontal, which types of opening we shall simply indicate in the text and in the claims with the adjective "horizontal" and "vertical".

The roofs having only one type of opening, i.e. the horizontal ones, and which are electrically actuated, are controlled by two keys, i.e. one for the opening and one for the closing, which control is generally achieved by means of an element which can be linerly or angularly moved from the rest position to two work positions, the opening one and the closing one. The roofs having two types of opening are controlled either by four keys, respectively two for horizontal opening and closing, and two for vertical opening and closing, or by only two keys, which control different actions according to the position of the roof, viz. either closed, or fully or partially horizontally open, or fully or partially vertically open, corresponding when the roof is closed one key to the horizontal opening control and the other one to the vertical opening control, while when the roof is horizontally open the horizontal opening key keeps its function and the other one becomes for horizontal closing until the roof is fully closed, and so when the roof is vertically open the vertical opening key keeps its function and the otherone becomes for vertical closing until the roof is fully closed again. Thus the change over of the keys functions occurring: upon opening, of the functions of the key other than that which has controlled the opening, and upon closing, of the functions of the same key which has controlled the closure.

For all roofs independently of the type of closing device and of its control, there is the drawback that the roofs can remaim open when the driver leaves the vehicle forgetting to close the roof.

The problem this present invention intends to solve is to afford the automatic closing of the vehicle roof by operating a two keys system, irrespective of the position the latter had on the driver departing from the vehicle.

From an abstract of document JP-A-60 71 330, a device is known that comprises means for generating command signal consisting of two switches for tilting up and down the roof and also comprises means for generating position signal consisting of two switches that detect the position of the roof and generate signals corresponding to the position of the roof. There is a first logical means which operates an electric motor to select one of each mode of opening, closing, tilting up and down in response to signals from both signal generating means which responds to the command signal and supplies a signal to make the roof move regardless of a signal from the position generating means.

The device appears to require the use of two keys if the roof has one type of opening and the use of four keys if the roof has two types of opening.

Document WO 80/01477 discloses a vehicle securing and lockout prevention system providing for automatically closing the vehicle opening roof once the operator departs from the vehicles in a certain manner, without taking any other action.

According to this present invention, the device for automatical closing of the roof of a vehicle provided with an anti-theft system, - which has two types of opening and is provided with an opening and closing device actuated by an electric motor supplied through a supply circuit including two switches controlled by two keys, the actuation of which determines different operations according to the actual position of the roof, the said keys and corresponding switches being intended one to control the vertical opening and the horizontal closing, the other one the horizontal opening and the vertical closing, - includes such electronic circuits, that is electronic circuits provided with such components and connected one to the other and to the antitheft system of the vehicle and with the supply circuit of the electric motor actuating the roof in such a way that they are suited to send upon arming of the antitheft system to the said supply circuit of the electric motor a sequence of control electric impulses such as to carry out as many operations of the roof, the final result of which operations being the definitive complete closing of the roof, indipendently of the position the latter had initially, that is upon arming of the anti-theft system.

In a preferred solution the electronic circuits comprise an electronic control circuit and an electronic check circuit, and the sequence of electronic impulses is emitted by the control circuit and comprises four impulses of equal sign, including a first very short impulse downstream of the first switch on the supply of the electric motor, a second long impulse sent downstream of the second switch, a third very short impulse sent again downstream of the second switch and finally a fourth long impulse sent downstream of the first switch, being anyhow unimportant in respect of the final complete closing of the roof the attribution of the functions to the first or the second switch, and that the check circuit is suited to cause the long impulses to stop as soon as the roof has attained the end position of its movement, in horizontal or vertical closing or opening.

In another preferred solution the control circuit includes four modules such and so interconnected that the first is suited, upon receiving an input signal coming from the antitheft system upon its arming, to send two output signals, one of which suited to determine through a first relay the first impulse of the sequence and i.e. a very short impulse downstream of the first switch and the other one suited to act as input signal to the second module, the latter being suited to send as a consequence after a predetermined delay from ceasing of the first impulse two output signals, one to determine through a second relay a long output impulse downstream of the second switch suited to last until the motor is running and i.e. the roof is moving, and i.e. a time at least longer than the maximum one which the roof requires to carry out a full opening or closing travel, and the other one to act as input signal to the third module, the latter being suited to send as a consequence after a predetermined delay from ceasing of the previous long impulse two signals in output, one to determine through the second relay a very short impulse downstream of the second switch and one to act as input signal to the fourth module, the latter being suited to send after a predetermined delay from ceasing of the previous impulse an output signal suited to determine through the first relay a long impulse downstream of the first switch, and that the check circuit is suited to measure the current absorbed by the motor and to send, when such current has the value corresponding to the normal running motor operation, an approval signal respectively to the second and fourth module of the control circuit so that the output signals from these, which determine the long impulses, continue and cease only when the said current has the variation corresponding to the stopping of the motor for attainment of the end of travel of the roof.

In another preferred solution the initial starting signal of the control circuit for automatical closing control of the roof is directly or indirectly determined by the central control element of the door locks, when their locking is actuated, or by the starting key when the latter is removed from the board, and this whether the vehicle is provided with antitheft system or not.

In order to explain better the invention according to this invention an embodiment shall be described, with reference to the encosed drawings wherein:

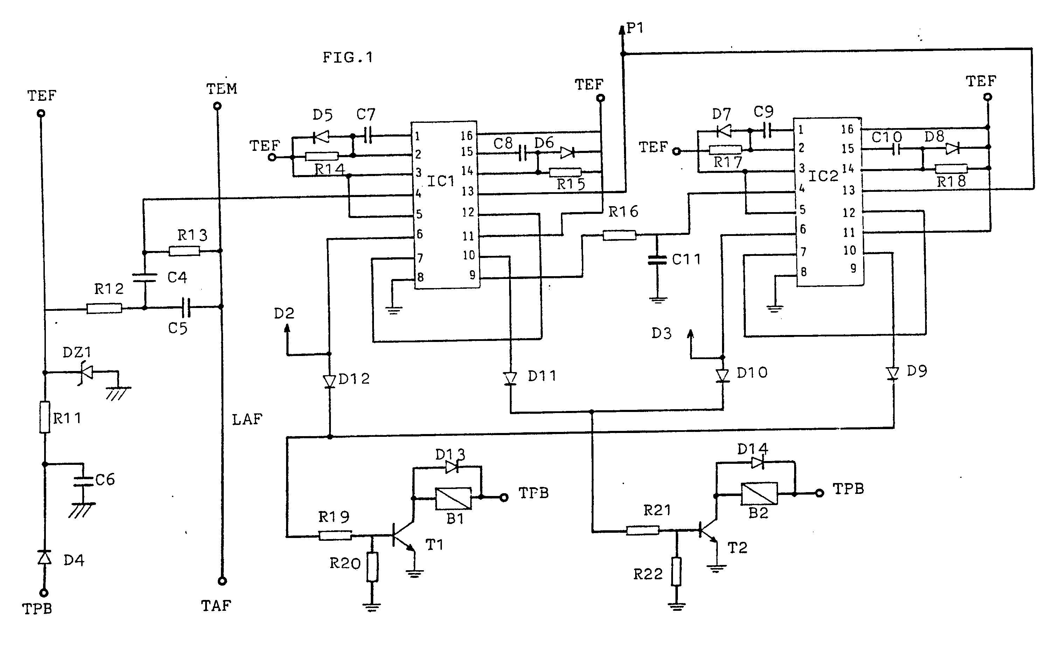

- figures 1 and 2 are electronic diagrams,

- figure 3 is a graph.

The device for the automatical closing of the opening roof of the vehicle of the example can be installed on an already running vehicle, the roof of which has two types of opening, the horizontal and the vertical one, and the supply circuit of the electric motor M for moving the roof is controlled by two keys A and B, which control respectively the switches IA and IB.

These switches when in rest position connect the two supplying lines LM1 and LM2 of the motor M to the negative. When the key A is depressed, it moves the switch IA so as to connect LM1 to the supplying line LBA coming from the vehicle battery at + 12 Vcc, and as consequence the motor M begins to run in one direction and continues until the key A is depressed, as upon its release the switch IA connects again the line LM1 of the motor to the negative, similarly operates the key B on the switch IB, so that the motor is fed in inverse direction and runs therefore in inverse direction to the one controlled by the key A.

The actuation of the two keys has different effects according to the position of the roof when the key is actuated, in fact when the roof is closed the control of the key A determined the vertical opening of the roof and the key B the horizontal opening, while when the roof is open horizontally, fully or even only partially, the key B keeps its function of horizontal opening and the key A changes its function, i.e. determines the horizontal closing and keeps said function until the roof is fully closed, while when the roof is vertically open, fully or even only partially, the key B keeps its function and so determines the vertical closing.

The element which provides for commutating the functions controlled by the keys operates of course downstream of the motor M, as the latter, when it is actuated by the key A always runs in the same direction and when it is actuated by the key B always runs in the other direction. The said commutation element is not described as it is not included in the subject of this invention and futhermore its composition and operation have no influence on the composition and operation of the device according to this invention.

The device for automatical closing of the roof includes a control circuit I and a check circuit II.

The negative supply of both control circuit I and check circuit II is ensured by the terminal TEF connected to the positive pole TPB of the vehicle battery at +12 Vcc through the filtration unit including D4 (1N4004), the capacitor to ground C6 (47 mF), R11 (47o) and the diode Zener to ground DZ1 (15V), while the negative supply is ensured by the terminal TEM, which through the conductor LAF is brought negative by the anti-theft system of the vehicle upon its arming and so remains the whole time said system is armed.

In the text the simbol "mF" is used for "microF" and "o" for "ohm".

The control circuit I is composed by two integrated circuits IC1 and IC2 (MC14528B Dual Monostable Multivibrator of the Motorola), which include each two circuits which function respectively as first, second, third and fourth module (MO1,MO2,MO3,MO4) of the control circuit I and control respectively MO1 and MO4 the relay RE1, and MO2 and MO3 the relay RE2.

Said relays include the coils B1 and B2 and the switches I1 and I2, which are series connected to the switches IA and IB downstream of these on the conductors LM1 and LM2 supplying the motor M and connect, in rest position, said conductors to the switches IA and IB, while when they are controlled respectively by B1 and B2 they connect LM1 and LM2 to the conductor LSB which reaches through the shunt RS (0,2 o) the positive pole at +12 Vcc TPB of the vehicle battery.

The check circuit II includes the integrated IC3 composed of two operational amplifier IC3′ and IC3″, and upstream of IC3′ the sunt RS (0,2 o), which is inserted directly on the supply line from the positive pole TPB of the battery at +12 Vcc of the second terminal of the switches I1 and I2, said line is connected upstream of RS to the positive input pin 3 of IC3′ through the unit including the resistor R1 (100 ko) and the parallel to ground of R2 (100 o) and of the capacitor C1 (0,1 mF), and downstream of RS to the negative input pin 2 of IC3′ through the unit comprising R3(100 o), R5 (100 0) and C2 (0,1 mF) to ground, and R4 (1 Mo) and R6 (1 Mo).

The pin 4 of IC3′ is connected to ground as negative supply of the integrated IC3, while the output pin 1 is connected through R9 (100 Ko) to the positive input (pin 5) of the operational amplifier with functions of comparator IC3″, the negative input pin 6 of which is kept at a fixed reference voltage of about 7 Vcc by the resistor R7 (68 Ko) connected to ground and R8 (100 Ko) connected to the +12 vcc of TEF.

Pin 8 of IC3″ is connected to TEF for positive supplying of IC3, while the output pin 7 is connected to TEF through R10 (10 Ko) and through diode D1 (1N4148) to pin 13 of reset of the two integrated circuit IC1 and IC2 of the control circuit I, and through the diodes D2 (1N4148) and D3 (1N4148) to the output pin 6 of IC1 and IC2, and moreover to ground through the electrolytic capacitor C3 (47 mF).

The integrated circuits IC1 and IC2 of the control circuit I include respectively the first one the modules MO1 and MO2, and the second one the modules MO3 and MO4. The modules MO1 of IC1 and MO3 of IC2 are connected to pin 1,2,3,4,5,6,7,8,9 of the respective integrated circuits, and the modules MO2 of IC1 and MO4 of IC2 to the pins 16,15,14,13,12,11,10,9 of the respective integrated circuits, being the pins 8 of negative supply from TEM and respectively the pins 16 of positive supply from TEF for the whole integrated and i.e. respectively for IC1 and IC2.

The negative input pin 4 of MO1 is connected to the conductor LAF coming from the anti-theft system through the parallel of the series of the two capacitors C5 (1 mF) and C4 (10 mF) and R13 (47 Ko), the intermediate point between C5 and C4 being connected to the terminal TEF through R12 (1 Ko).

The pins 1,2 of MO1 are connected to TEF through the timing unit comprising C7 (10 mF) and R14 (100 Ko) and through diode D5 (1N4148), and the positive input pin 5 and the reset pin 3 are directly connected to the terminal TEF and hence always kept high, the positive output pin 6 of MO1 is connected through diode D2 (1N4148) to the reset pin 13 of MO2 and through D12 (1N4004) and R19 (1 ko) to the base of the transistor T1 (PN2 222), which is also connected to ground through R20 (10 Ko).

The emitter of T1 is connected to ground and the collector to the negative terminal of the coil B1 of the relay RE1 (A 208 of Siemens), which includes the switch I1 controlled by the aforesaid coil, while the positive terminal of B1 is connected to the positive TPB of the vehicle battery, said coil is provided with the protection diode D13 (1N4004).

The negative output pin 7 of MO1 is directly connected to the negative input pin 12 of MO2.

The pins 15,14 of MO2 are connected to TEF through the timing unit C8 (47 mF) and R15 (1 Mo) and through diode D6 (1N4148) and the positive input pin 11 is directly connected to TEF and hence always kept high.

The reset pin 13 is connected through diode D1 to the output pin 7 of IC3″ of the check circuit II. The positive output pin 10 is connected through diode D11 (1N4001) and R21 (1 Ko) to the base of the transistor T2 (PN 2222), which base is also connected to ground through R22 (10 Ko), the emitter of T2 is connected to ground while the collector is connected to the negative terminal of the coil B2 of relay RE2 (A 208 of Siemens), the positive terminal of which is connected to the positive pole TPB at +12 Vcc of the vehicle battery, B2 is protected by diode D14 (1N4004).

The negative output pin 9 of MO2 is connected through the timing unit composed by the electrolytic capacitor C11 (10 mF) and R16 (22 Ko) to the negative input pin 4 of MO3 of IC2.

The pins 1,2 of MO3 are connected to TEF through the timing unit C9 (10 mF) and R17 (10 Ko) and through D7 (1N4148), while the reset pin 3 and the positive input pin 5 are connected to TEF and hence always kept high.

The positive output pin 6 is connected through diode D3 (1N4148) to the reset pin 13 of IC2, and through diode D10 (1N4001) to the base of the transistor T2 for controlling the coil B2.

The negative input pin 7 of MO3 is directly connected to the negative input pin 12 of MO4, while the pins 15,14 are connected to TEF through the timing unit comprising C10 (47 mF) and R18 (1 Mo) and through diode D8 (1N4148), finally while pin 9 is not used, pin 10 is connected through diode D9 (1N4001) to the base of the transistor T1 through R19 and R20 to ground.

Operating of the device.

Upon arming of the anti-tefth system the latter brings low the terminal TAF of the conductor LAF so as to give the ground to the whole device through TEM and to give a high impulse to pin 4 of MO1 which, having the reset pin 3 always high, sends a very short positive impulse from pin 6, which duration of about 500 ms is determined by the time constant C9xR17, said impulse acting on T1 determines the excitation of the coil B1 of the relay RE1, which controls the switch I1 so that the line LM1 becomes connected to the positive supply of the line LSB and therefore the motor M receives a positive impulse IM1 on said line of very short duration viz. equal to 500 ms and rotates for said time.

Said control corresponds to that one which is given through the key A. Upon ceasing of the output signal from pin 6 of MO1 the motor stops. After ceasing of said impulse and as consequence of the low output signal from MO1 and the high input signal to pin 12 of MO2, said module sends a long positive output signal from pin 10, which determines the excitation of the coil B2 and hence the actuation of the switch I2 which determines for equal time a positive impulse IM2 to the line LM2 of the motor, which rotates thus in inverse direction from the previous one, therefore obtaining the same effect which would have been obtained by actuating the key B. When the motor is running it absosrbs a current, which determines at the ends of the shunt RS a voltage drop, which as a consequence determines a drop of the voltage at pin 2 of IC3′ and therefore the difference between the said voltage and the one at pin 3 of the same amplifier determines a positive output from pin 1 of said amplifier and therefore a positive input at pin 5 of IC3″ higher than the value of the reference voltage at pin 6 of IC3″ and hence the sending of a positive signal from pin 7 of the same: said positive signal through D1 maintains high the reset pin 13 of MO2, already brought high by pin 6 of MO1 through D2 and so kept by the discharge of C3, and allows therefore that MO2 keeps the positive output signal from pin 10 and hence through B2, I2 the positive supply of the line LM2 of the motor and hence keeping running of the latter all over the time the latter moves. In fact, as soon as the roof reaches the end of travel the motor consequently stops and therefore the current absorbed by the latter decreases below a determined value and so the voltage drops at the ends of the shunt RS and the voltages at the pins 2,3 of IC3′ balance again and consequently IC3′ brings low the pin 5 of the comparator IC3″ and therefore the positive output impulse of IC3″ ceases and the reset of MO2 goes low and locks the functioning of the latter and determines the ceasing of the positive long impulse IM2 downstream of LM2.

Said impulse might last relating to the time constant C8xR15 a time much higher (about 25 s) than the one the motor takes for the complete closing or opening of the roof, which is about 5 s, but its duration is determined on the contrary by the check circuit II in relation to the actual travel of the roof. Simultaneously to the positive signal sent by MO2 to pin 10, MO2 sends a negative signal from pin 9, which after the time predetermined by the constant C11xR16 acts on the pin 4 of the module MO3 which send as a consequence a very short impulse, which duration of 500 ms is determined by the constant C9xR17 equal to the constant C7xR14 of MO1, said impulse acts it too on the coil B2 and therefore on the switch I2 and therefore determines the supplying of the motor with the impulse IM3 with the same polarity of the previous long impulse IM2.

Upon ceasing of the aforesaid short impulse IM3, Mo3 through pin 7 sends a negative impulse to pin 12 of MO4, the reset pin 13 of which is already high following the positive output impulse from pin 7, which arrives to pin 13 through D3 and which is kept high as a consequence of the discharge of C3. The positive impulse which as a consequence is sent from pin 10 of MO4 acts through T1 on the relay RE1 and hence sends a positive impulse IM4 to the line LM1 supplying the motor and causes its rotation, for the time the reset pin 13 of MO4 is kept positive by the high signal of the check circuit II, for the same reasons explained for the duration of the long impulse sent by MO2.

Upon ceasing of the motor stroke and therefore of the falling of the supply current, the positive output from said check circuit II ceases and the therefore the reset pin 13 of MO4 is brought low and as a consequence the impulse IM4 is locked, which would have possibly lasted in relation to the constant C10xR18 equal to the constant C8xR15 of the module MO2.

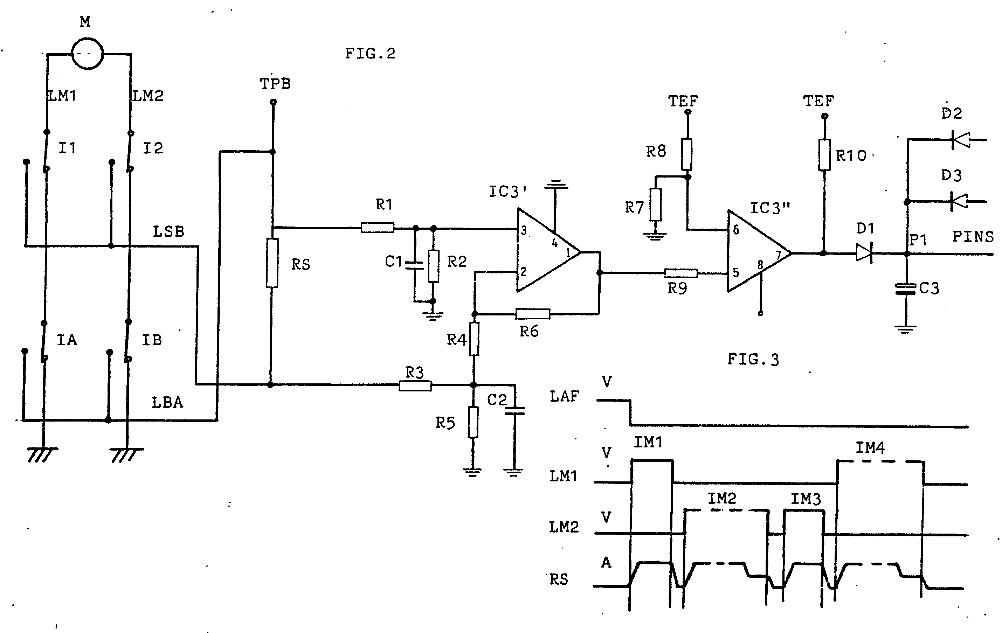

In the four graphs of figure 3 are shown respectively beginning from the top the voltage on line LAF, which becomes negative upon arming of the anti-tefth system, the cycles of the impulses IM1,IM2,IM3,IM4 to the conductor LM1 and LM2, and the corresponding values of the current absorbed by the motor M.

The long impulses IM2 and IM4 are shown with dash line as their actual duration depends from the initial position of the roof.

The delay from the beginning of the impulse IM2 in respect of the ceasing of IM1, and of IM4 in respect of ceasing of IM3 is determined by the feature of the integrated IC1 and IC2, while the delay of the impulse IM3 in respect of ceasing of IM2 is determined by the value of the time constant C11xR16.

The duration of the short impulses is indipendent from the check circuit II as the resets of MO1 and MO3 are always kept high. The sequence of the four impulses, IM1 short, downstream of I1, IM2 long downstream of I2, IM3 short still downstream of I2 and IM4 long downstream of I1 determines a cycle of movements which is different according to the position of the roof when the anti-tefth system is armed, but anyhow always with the same final effect of the full closing of the roof.

In fact if the roof is in closed position when the anti-tefth system is armed, the short impulse IM1 downstream of I1 determines the start of the vertical opening of the roof based upon the functions of the keys and of the respective switches previously described, hence the second impulse downstream of I2, the resulting functions of the control of B, IB and I2 and hence of LM2 having been commutated upon vertical opening, determines the full closing of the roof which obviously occurs in a very short time according to the 500 ms of opening. The third short impulse IM3 still downstream of I2 determines a movement to start the horizontal opening, in fact the previous closing has determined again the commutation of the functions resulting from the controls of B, IB,I2 and hence of LM2, the fourth impulse IM4 downstream of I1 determines the definitive horizontal closing of the roof in a very short time as the horizontal opening had been determined by the third impulse IM3 of 500 ms.

If on the contrary the roof is open horizontally upon arming of the anti-tefth system the first short impulse IM1 downstream of I1 determines the start of the closing of the roof, in fact the resulting functions ensuing from the control of A, IA, I1 and hence of LM1 have been commutated upon opening of the roof.

The second long impulse IM2 downstream of I2 determines instead the full horizontal opening of the roof, in fact upon opening of the roof the functions resulting from the controls of B, IB, I2 and LM2 have not been commutated. The third very short impulse IM3 downstream of I2 has practically no effect as it always tends to open the roof, which is already fully open, while the fourth long impulse IM4 downstream of I1 determines the definitive complete closing of the roof.

If on the contrary upon arming of the anti-tefth system the roof is vertically open the first short impulse IM1 downstream of I1 determines the further opening of the roof if the latter is partially open while if it is fully open IM1 has no effect as it tends to open, and in fact the functions resulting from the controls of A, IA, I1 and hence of LM1 have not been commutated, while the second long impulse IM2 downstream of I2 determines the full vertical closing of the roof, in fact upon vertical opening the functions resulting from the controls of B, IB, I2 and hence of LM2 have been commutated, the third short impulse IM3 downstream still of I2 causes a start of the horizontal re-opening of the roof, in fact the closing has caused the commutation of the functions resulting from the controls of B,IB,I2 and hence of LM2, hence the fourth long impulse IM4 downstream of I1 determines the horizontal closing of the roof, as the resulting functions of the controls of A, IA, I1 and hence of LM1 have been commutated upon horizontal re-opening of the roof. Obviously the fourth impulse which might be long is very short because the roof had been opened only for 500 ms.

If the functions resulting from the controls of A, IA, I1 and LM1 and of B, IB, I″ and LM2 with closed roof were exchanged upon manufacture of the device for closing and opening of the roof the sequence provided for the four impulses previously described would all the same cause the complete definitive closing of the roof, only that the movements of the roof when horizontally open upon arming of the anti-tefth system would be those which it had in the previous example when vertically open and vice versa, while with initially closed roof instead of having first the vertical opening and closing there would be first the horizontal opening and closing and then the vertical opening and subsequent full definitive closure of the roof.

## Claims

1. A device for automatically closing the opening roof of a vehicle provided with an anti-theft system, said device having two types of opening and being provided with an opening and closing device actuated by an electric motor (M) supplied through a supply circuit (LM1, LM2) including two switches (IA, IB) controlled by two keys (A, B), the actuation of which determines different operations according to the actual position of the roof, the said keys and corresponding switches (IA, IB) being intended one to control the vertical opening and the horizontal closing, the other one the horizontal opening and the vertical closing, including electronic circuits (I, II) connected one to the other and to the anti-theft system of the vehicle and with the supply circuit (LM1, LM2) of the electric motor (M) actuating the roof in such a way, that they are suited to send, upon arming of the anti-theft system, to said supply circuit (LM1, LM2) a sequence of electric control impulses (IM1, IM2, IM3, IM4) such as to carry out as many operations of the roof, the final result of these operations being the definitive complete closing of the roof, independently of the position the latter had initially, that is at the moment of the arming of the anti-theft system, characterized in that the electronic circuits comprise an electronic control circuit (I) and an electronic check circuit (II) and the sequence of electric impulses (IM1, IM2, IM3, IM4) is emitted by the control circuit (I) and comprises four impulses of equal sign, including a first very short impulse (IM1) downstream of the first switch (IA) on the supply of the electric motor (M), a second long impulse (IM2) sent downstream of the second switch (IB), a third very short impulse (IM3) sent again downstream of the second switch (IB) and finally a fourth long impulse (IM4) sent downstream of the first switch (IA), being anyhow unimportant in respect of the final complete closing of the roof the attribution of the functions to the first (IA) and the second (IB) switch, and that the check circuit (II) is suited to cause the long impulses (IM2, IM4) to stop as soon as the roof has attained the end position of its movement, in horizontal or vertical closing or opening.

2.  A device as claimed in claim 1 characterized in that the control circuit (II) includes four modules (MO1,MO2,MO3,MO4) such and so interconnected that the first (MO1) is suited, upon receiving an input signal coming from the anti-theft system upon its arming, to send two output signals, one of which suited to determine through a first relay (RE1) the first impulse (IM1) of the sequence and i.e. a very short impulse downstream of the first switch (IA) and the other one suited to act as input signals to the second module (MO2), the latter being suited to send as a consequence after a predetermined delay from ceasing of the first impulse (IM1) two output signals, one to determine through a second relay (RE2) a long output impulse (IM2) downstream of the second switch (IB) suited to last until the motor (M) is running and i.e. the roof is moving, and i.e. a time at least longer than the maximum one which the roof requires to carry out a full opening or clocking travel, and the other one to act as input signal to the third module (MO3), the latter being suited to send as a consequence after a predetermined delay from ceasing of the previous long impulse (IM2) two signals in output, one to determine through the second relay (RE2) a very short impulse (IM3) downstream of the second switch (IB) and one to act as input signal to the fourth module (MO4), the latter being suited to send after a predetermined delay from ceasing of the previous impulse (IM3) an output signal suited to determine through the first relay (RE1) a long impulse (IM4) downstream of the first switch (IA), and that the check circuit (II) is suited to measure the current absorbed by the motor (M) and to send, when such current has the value corresponding to the normal running motor operation, an approval signal respectively to the second and fourth module (MO2,MO4) of the control circuit (II) so that the output signals from these, which determine the long impulses (IM2,IM4), continue and cease only when the said current has the variation corresponding to the stopping of the motor for attainment of the end of travel of the roof.

3.  A device as claimed inclaim 1 , 2, characterized in that the initial starting signal of the control circuit (II) for the roof closing control is imparted by actuating the central control element of vehicle door locks or removing the starting key from the vehicle board.

**Revendications**

1.  Dispositif pour fermer automatiquement le toit ouvrant d'un véhicule équipé d'un système antivol, ledit dispositif possédant deux modes d'ouverture et étant muni d'un dispositif d'ouverture et de fermeture actionné par un moteur électrique (M) qui est alimenté par l'intermédiaire d'un circuit d'alimentation (LM1, LM2) comprenant lui-même deux commutateurs (IA, IB) commandés par deux boutons (A, B), la manoeuvre de ces boutons déclenchant des opérations qui sont différentes selon la position actuelle du toit, lesdits boutons et les commutateurs correspondants (IA, IB) étant destinés, l'un à commander l'ouverture verticale et la fermeture horizontale, et l'autre l'ouverture horizontale et la fermeture verticale, comprenant des circuits électroniques (I, II) connectés l'un à l'autre et connectés au système antivol du véhicule, ainsi qu'au circuit d'alimentation (LM1, LM2) du moteur électrique (M) actionne le toit de telle manière qu'ils soient appropriés pour envoyer, à la suite de l'armement du système antivol, auxdits circuits d'alimentation (LM1, LM2) d'une séquence d'impulsions de commande électrique (IM1, IM2, IM3, IM4) de manière à réaliser autant de manoeuvres du toit, le résultat final de ces manoeuvres étant la fermeture définitive et complète du toit indépendamment de la position que ce dernier possédait initialement, c'est-à-dire au moment de l'armement du système antivol, caractérisé en ce que les circuits électroniques comprennent un circuit de commande électrique (I) et un circuit de contrôle électronique (2), et la séquence des impulsions électriques (IM1, IM2, IM3, IM4) est émise par le circuit de commande (I) et comprend quatre impulsions de même signe, comprenant une première impulsions très courte (IM1) en aval du premier commutateur (IA) sur l'alimentation du moteur électrique (M), une deuxième impulsion longue (IM2) émise en aval du deuxième commutateur (IB), une troisième impulsion très courte (IM3) émise à nouveau en aval du deuxième commutateur (IB) et finalement une quatrième impulsion longue (IM4) émise en aval du premier commutateur (IA), l'attribution des fonctions au premier (IA) et au deuxième (IB) commutateurs étant de toute façon sans aucune importance pour la fermeture finale et totale du toit, et en ce que le circuit de contrôle (II) est approprié pour faire cesser les impulsions longues (IM2, IM4) dès que le toit a atteint la position finale de son mouvement, en fermeture ou ouverture horizontale ou verticale.

2. Dispositif selon la revendication 1, caractérisé en ce que le circuit de commande (II) comprend quatre modules (MO1, MO2, MO3, MO4) qui sont construits et interconnectés de telle manière que le premier (MO1) soit approprié pour émettre, à la réception d'un signal d'entrée provenant du système antivol au moment de son armement, deux signaux de sortie, dont l'un est approprié pour déclencher par une premier relais, (RE1), la première impulsion (IM1) de la séquence et, c'est-à-dire une très courte impulsion en aval du premier commutateur (IA) et l'autre étant approprié pour agir en tant que signal d'entrée envoyé au deuxième module (MO2), celui-ci étant approprié pour émettre en conséquence, après un retard prédéterminé qui fait suite à la cessation de la première impulsion (IM1), deux signaux de sortie, l'un pour déclencher par l'intermédiaire d'un deuxième relais (RE2) une impulsion de sortie longue (IM2) en aval du deuxième commutateur (IB), qui est appropriée pour durer aussi longtemps que le moteur (M) est en marche, c'est-à-dire aussi longtemps que le toit est en mouvement, c'est-à-dire un temps au moins supérieur au temps maximum que le toit demande pour effectuer une course complète ouverture ou de fermeture, et l'autre pour agir en qualité de signal d'entrée pour le troisième module (MO3), de dernier étant approprié pour émettre en conséquence, deux signaux de sortie après un retard prédéterminé qui fait suite à la cessation de l'impulsion longue précédente (IM2), l'un pour déclencher, par l'intermédiaire du deuxième relais (RE2), une impulsion très courte (IM3) en aval du deuxième commutateur (IB), et un pour jouer le rôle de signal d'entrée pour le quatrième module (MO4), ce dernier étant approprié pour émettre après un retard prédéterminé qui fait suite à la cessation de l'impulsion précédente (IM3), un signal de sortie approprié pour déclencher par l'intermédiaire du premier relais (RE1) une impulsion longue (IM4) en aval du premier commutateur (IA), et en ce que le circuit de contrôle (II) est approprié pour mesurer le courant absorbé par le moteur (M) et pour émettre, lorsque ce courant possède la valeur qui correspond au fonctionnement normal du moteur en marche, pour envoyer un signal d'approbation respectivement aux deuxième et quatrième modules (MO2, MO4) du circuit de commande (II) de façon que les signaux de sortie émis par ces modules, qui déclenchent les impulsions longues (IM2, IM4), se prolongent et ne cessent que lorsque ledit courant présente la variation qui correspond à l'arrêt du moteur résultant de l'arrivée en fin de course du toit.

3. Dispositif selon les revendications 1, 2, caractérisé en ce que le signal de démarrage initial du circuit de commande (II) servant à la commande de la fermeture du toit est déclenché par l'actionnement de l'élément de commande centralisé des serrures des portes du véhicule, ou par l'extraction de la clé de contact du tableau de bord.

**Ansprüche**

1. Eine Einrichtung für das automatische Schließen des Daches der (Dach- ) Öffnung eines Fahrzeuges, welches mit einer Diebstahlsicherung versehen ist, wobei die genannte Einrichtung zwei Arten des Öffnens umfaßt und mit einer Öffnungs- und Schließeinrichtung versehen ist, welche durch einen elektrischen Motor (M) gesteuert wird, der über einen Speisekreis (LM1, LM2), welcher zwei Schalter (1A, 1B) enthält, die durch zwei Schlüssel (A, B) betätigt werden, gespeist wird und deren Betätigung entsprechend der tatsächlichen Lage des Daches unterschiedliche Wirkungen verursacht, wobei die genannten Schlüssel und die zugeordneten Schalter (IA, IB) dazu bestimmt sind, daß durch die einen das vertikale Öffnen und das horizontale Schließen und durch die anderen das horizontale Öffnen und das vertikale Schließen gesteuert wird, mit elektronischen Schaltkreisen (I, II), welche miteinander und mit der Diebstahlsicherung sowie mit dem Speisekreis (LM1, LM2) für den elektrischen Motor (M) zur Betätigung des Daches in einer solchen Weise verbunden sind, daß sie nach der Einschaltung der Diebstahlsicherung geeignet sind, an den genannten Speisekreis (LM1, LM2) eine Folge von elektrischen Steuerimpulsen (IM1, IM2, IM3, IM4) abzugeben, um möglichst viele Operationen des Daches auszuführen, wobei das Endresultat dieser Operationen die vollständige Schließung des Daches unabhängig davon ist, welche Lage dieses ursprünglich, d.h. im Zeitpunkt der Einschaltung der Diebstahlsicherung, eingenommen hat, dadurch gekennzeichnet, daß die elektronischen Schaltkreise einen elektronischen Steuerkreis (1) und einen elektronischen Profkreis (I) enthalten und daß die Folge der elektrischen impulse (IM1, IM2, IM3, IM4) vom Steuerkreis (I) abgegeben wird und vier Impulse gleicher Form umfaßt, mit einem ersten sehr kurzen Impuls (IM1) nach der ersten Schalter (IA) für die Speisung des elektrischen Motors (M), einem zweiten langen Impuls (IM2), welcher nach dem zweiten Schalter (IB) abgegeben wird, einen dritten sehr kurzen Impuls (IM3), der wiederum nach dem zweiten Schalter (IB) abgegeben wird, und schließlich einem vierten langen Impuls (IM4), der nach dem ersten Schalter (IA) abgegeben wird, wobei die Funktionen des ersten Schalters (IA) und des zweiten Schalters IB) im Hinblick auf das endgültige Schließen des Daches unwesentlich sind und daß der Prüfkreis (II) geeignet ist, die langen Impulse (IM2, IM4) zu beenden, sobald das Dach beim horizontalen oder vertikalen Schließen oder Öffnen die Endlage seiner Bewegung erreicht hat.

2. Eine Einrichtung nach Anspruch 1, dadurch gekennzeichnet, daß der Steuerkreis (I) vier Module (MO1, MO2, MO3, MO4) enthält welche miteinander so verbunden sind, daß der erste Modul (MO1) nach Erhalt eines Eingangssignals, welches von der Diebstahlsicherung nach deren Einschaltung abgegeben wird, geeignet ist, zwei Ausgangssignale zu senden, von denen eines dazu dient, über ein erste Relais (RE1) den ersten Impuls (IM1) der Folge, nämlich einen sehr kurzen Impuls nach dem ersten Schalter (IA), zu bewirken und das andere als Eingangssignal für den zweiten Modul (MO2) dient, wobei dieser letztere geeignet ist, als Folge nach einer vorbestimmten Verzögerung nach dem Ende des ersten Impulses (IM1) zwei Ausganssignale abzugeben, eines um über ein zweites Relais, (HE2) einen langen Ausgangsimpuls (IM2) nach dem zweiten Schalter (IB) abzugeben, welcher so lange anhält, bis der Motor (M) läuft und sich des Dach bewegt, nämlich eine Zeit, welche mindestens länger ist als das Maximum, welches das Dach erfordert, um eine vollständige Öffnungsoder Schließbewegung auszuführen, und das andere als Eingangssignal für den dritten Modul (MO3) dient, wobei letzterer geeignet ist, als Folge nach einer vorbestimmten Verzögerung nach dem Ende des vorhergehenden langen Impulses (IM2), zwei Ausganssignale abzugeben, wobei das eine über das zweite Relais (RE2) einen sehr kurzen Impuls (IM3) nach dem zweiten Schalter (IB) bewirkt und das andere beim vierten Modul (MO4) als Einganssignal wirkt, wobei letzterer dazu dient, nach einer vorbestimmtem Verzögerung nach dem Ende des vorhergehenden Impulses (IM3) ein Ausgangssignal abzugeben, welches über das erste Relais (RE1) einen langen Impuls (IM4) nach dem ersten Schalter (IA) bewirkt und daß der Prüfkreis (II) dazu geeignet ist, denjenigen Strom zu messen, welcher durch den Motor (M) verbraucht wird um dann, wenn dieser Strom einen Wert aufweist, welcher dem Normalwert des laufenden Motors entspricht, an den zweiten und vierten Modul (MO2, MO4) des Steuerkreises (II) ein Bestätigungssignal abzugeben, wodurch deren Ausganssignale, welche die langen Impulse (IM2, IM4) bewirken, weiter wirken und erst dann enden, wenn sich der genannte Strom infolge des Anhaltens des Motors nach Beendigung der Bewegung des Daches ändert.

3. Eine Einrichtung nach einem der Ansprüche 1 und 2, dadurch gekennzeichnet, daß das ursprüngliche Startsignal des Steuerkreises (II) für die Steuerung des Schließens des Daches durch Betätigung eines zentralen Steuerelementes der Türschlüsser oder durch Entfernung des Startschlüssels aus dem Schaltbrett des Fahrzeuges ausgelöst wird.

FIG.1

FIG.2

FIG.3

M

LM1    LM2

I1     I2

LSB

IA     IB

LBA

TPB

RS

R1

C1    R2

IC3'

R4    R6

R3    C2

R5

TEF        TEF

R8

R7

IC3"

R9

R10

D1

D2

D3

P1    PINS

C3

LAF

IM1                    IM4

LM1

IM2    IM3

LM2

RS